# EUROPÄISCHE PATENTANMELDUNG

(11) **EP 1 637 755 A1**
(43) Veröffentlichungstag der Anmeldung: **22.03.2006**
(21) Anmeldenummer: 05108228.7
(22) Anmeldetag: 08.09.2005
(51) Int. Cl.: F16D 3/60

(54) **Vorrichtung zur Bewegungs- und Kraftübertragung**

(30) Priorität: 20.09.2004 DE 102004046338
(71) Anmelder: SIEMENS AKTIENGESELLSCHAFT, 80333 München (DE)
(72) Erfinder: Abraham, Simon, 10115 Berlin (DE)

(57) **Zusammenfassung**

Die Erfindung betrifft eine Vorrichtung zur Bewegungs- und Kraftübertragung mit mehreren axial drehbaren Wellenabschnitten (4, 5), die auf Lagerböcken gelagert und über Kupplungen (7) miteinander verbunden sind. Um eine bogenförmige Anordnung der Wellenabschnitte (4, 5) zu ermöglichen, wobei Maß- und Anordnungstoleranzen ausgeglichen werden, ist vorgesehen, dass die Kupplungen (7) mit den Enden benachbarter Wellenabschnitte (4, 5) verbundene Kurbelarme (8a, 8b) aufweisen, die an ihren freien Enden mit im Wesentlichen zu den Wellenabschnitten (4, 5) achsparallelen Lagerzapfen (9a, 9b) verbunden sind, welche in ersten winkelbeweglichen Gelenklagern (10a, 10b) eines gemeinsamen Koppelgliedes (11) gelagert sind.

## Beschreibung

Die Erfindung betrifft eine Vorrichtung zur Bewegungs- und Kraftübertragung gemäß dem Oberbegriff des Anspruchs 1. Derartige Anordnungen mit einer axial drehbaren Welle sind für sehr viele Anwendungen, beispielsweise im Maschinenbau und im Fahrzeugbau, gebräuchlich. Nachfolgend wird im Wesentlichen auf Weichenstelleinrichtungen Bezug genommen, ohne dass die Erfindung auf diese Anwendung beschränkt sein soll.

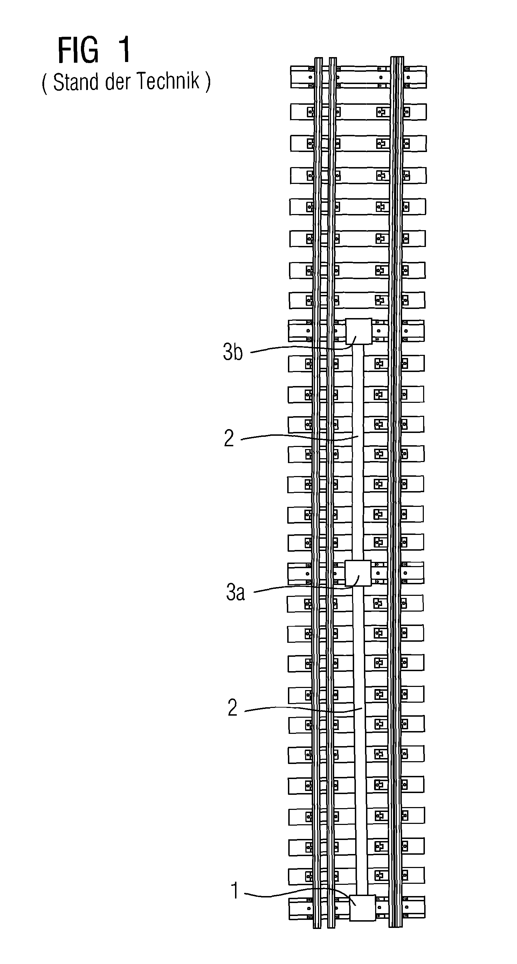

Aus der noch nicht veröffentlichten deutschen Anmeldung mit dem Aktenzeichen 103 30 999.3 ist eine Einrichtung zum Umstellen von Weichen bekannt, bei der ein Torsionsgestänge in Form einer drehbaren Welle vorgesehen ist, welche zwischen den Schienen angeordnet ist und die Stellkraft von einem Weichenantrieb auf mehrere Stelleinrichtungen überträgt. Das Prinzip dieser Einrichtung ist in Figur 1 dargestellt. Dabei wird mittels eines nicht dargestellten Motors ein Spitzenverschluss 1 betätigt, wobei gleichzeitig eine Welle 2 um einige Grad verdreht wird, wodurch weitere Stelleinrichtungen 3a und 3b betätigt werden. An der Stelleinrichtung des Spitzenverschlusses 1 und an jeder weiteren Stelleinrichtung 3a, 3b ist die Welle 2 gelagert, um die Reaktionskräfte aufzunehmen. Dadurch wird die Welle 2 an derart vielen Stellen gelagert, dass bei nicht exakt fluchtenden Lagerungen Verspannungen und damit Kraftverlust und zusätzlicher Verschleiß verursacht werden können. Nachteilig ist außerdem, dass diese Torsionsgestänge nicht in Bogenweichen eingesetzt werden können, da eine gerade und starre Welle 2 unbedingt erforderlich ist. Denkbar wäre eine Kopplung von Wellenstücken mittels Kardangelenk oder sonstiger ausgleichender Kupplung. Diese Lösungen haben jedoch den Nachteil eines großen Raumbedarfs, der die zulässige Bauhöhe, d. h. maximal bis Schienenoberkante, des Torsionsgestänges überschreiten würde.

Der Erfindung liegt die Aufgabe zugrunde, eine Vorrichtung zur Bewegungs- und Kraftübertragung der gattungsgemäßen Art anzugeben, die auch für bogenförmige Anordnung der Wellenabschnitte geeignet ist, wobei Toleranzen der Bauteile zulässig sein sollen.

Die Aufgabe wird mit den kennzeichnenden Merkmalen des Anspruchs 1 gelöst. Zwei aufeinander folgende Wellenabschnitte sind über Kurbelarme mit einem gemeinsamen Koppelglied verbunden, wobei Lagerzapfen der Kurbelarme in winkelbewegliche Gelenklager des Koppelgliedes eingreifen. Dadurch können die einzelnen Wellenabschnitte auch entlang einer Kurve angeordnet werden. Dies ermöglicht beispielsweise den Einsatz des erfindungsgemäßen Torsionsgestänges in Bogenweichen. Die winkelbeweglichen Gelenklager können z. B. nach DIN ISO 12 240-1 ausgebildet sein. Derartige Gelenklager zeichnen sich insbesondere durch Wartungsfreiheit und lange Lebensdauer aus. Da die Wellenabschnitte bei Weichenantrieben nur um einen kleinen Winkel gedreht werden müssen, sind nur geringfügige Abnutzungserscheinungen der winkelbeweglichen Gelenklager zu erwarten. Sämtliche Arten von Form- und Lageabweichungen des Torsionsgestänges sowie bei der Montage auf der Weiche können bis zu einen gewissen Grad toleriert werden. Die Kupplungen zwischen den Weichenabschnitten benötigen nur eine geringe Bauhöhe, so dass diese in einer Verschlussschwelle bzw. in einem Verschlussfach untergebracht werden können.

Gemäß Anspruch 2 sind auch für die Lagerung der Wellenabschnitte winkelbewegliche Gelenklager vorgesehen. Ein genaues Fluchten der Wellenlager ist dadurch nicht mehr erforderlich. Außerdem ergibt sich ein Ausgleich der Längenänderung der Wellenabschnitte infolge von Temperaturschwankungen. Die Lagerblöcke für die Wellenabschnitte sind vorzugsweise an beiden Enden der Wellenabschnitte angeordnet. Dadurch lassen sich aufgrund der Hebelgesetze sehr hohe Drehmomente übertragen.

Eine besonders vorteilhafte Verwendung des beanspruchten Torsionsgestänges besteht gemäß Anspruch 3 in der Übertragung von Stellbewegungen bei Bogenweichen mit mehreren Stelleinrichtungen.

Nachfolgend wird die Erfindung anhand figürlicher Darstellungen näher erläutert. Es zeigen:
- Figur 1: ein Torsionsgestänge herkömmlicher Bauart,
- Figur 2: eine Prinzipdarstellung eines beanspruchten Torsionsgestänges,
- Figur 3: die wesentlichen Bauteile einer Wellenabschnittskupplung und
- Figur 4: die Wellenabschnittskupplung in montierter Form.

Figur 1 zeigt das oben beschriebene bekannte Torsionsgestänge, das für Bogenweichen nicht geeignet ist.

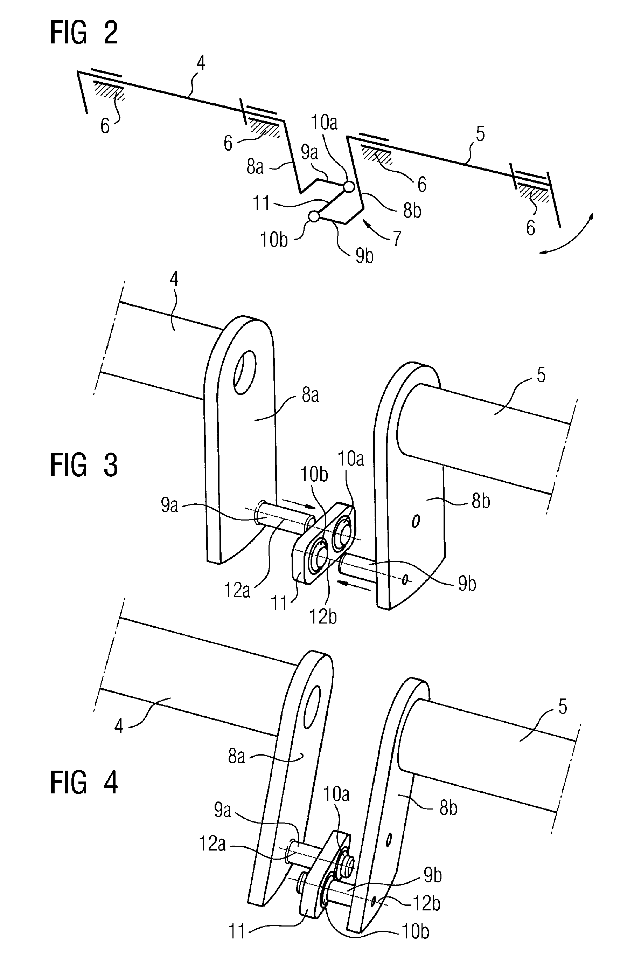

Das Grundprinzip eines erfindungsgemäßen Torsionsgestänges ist in Figur 2 veranschaulicht. Anstellt der bekannten einstückigen oder zu einem Stück zusammengeflanschten Welle 2 sind mehrere separate Wellenabschnitte 4 und 5 vorgesehen. Diese Wellenabschnitte 4 und 5 sind jeweils an beiden Enden mittels winkelbeweglicher Gelenklager 6 gelagert. Zur Übertragung der Drehbewegung von dem Wellenabschnitt 4 auf den benachbarten Wellenabschnitt 5 ist eine spezielle Kupplung 7 vorgesehen. Diese Kupplung 7 besteht im Wesentlichen aus zwei Kurbelarmen 8a und 8b, die mit den Enden aufeinander folgender Wellenabschnitte 4 und 5 verbunden sind und an ihren freien Enden Lagerzapfen 9a und 9b aufweisen, welche in winkelbewegliche Gelenklager 10a und 10b eines Koppelgliedes 11 eingesetzt sind.

Durch die winkelbeweglichen Gelenklager 6 zur drehbaren Halterung der Wellenabschnitte 4 und 5 und die winkelbeweglichen Gelenklager 10a und 10b der Kupplung 7 sind allfällige Toleranzen der Bauteile und der Anordnung der Bauteile zueinander bis zu einer bestimmten Größenordnung ausgeglichen. Die Wellenabschnitte 4 und 5 können auch winklig zueinander angeordnet sein, wobei dann die in den Figuren 3 und 4 eingezeichneten Längsachsen 12a und 12b von Lagerzapfen 9a bzw. 9b und winkelbeweglichem Gelenklager 10a bzw. 10b den gleichen Winkel zueinander aufweisen.

Die Erfindung beschränkt sich nicht auf das vorstehend angegebne Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Vorrichtung zur Bewegungs- und Kraftübertragung mit mehreren axial drehbaren Wellenabschnitten (4, 5), die auf Lagerblöcken gelagert und über Kupplungen (7) miteinander verbunden sind,
**dadurch gekennzeichnet,**
**dass** die Kupplungen (7) mit den Enden benachbarter Wellenabschnitte (4, 5) verbundene Kurbelarme (8a, 8b) aufweisen, die an ihren freien Enden mit im Wesentlichen zu den Wellenabschnitten (4, 5) achsparallelen Lagerzapfen (9a, 9b) verbunden sind, welche in ersten winkelbeweglichen Gelenklagern (10a, 10b) eines gemeinsamen Koppelgliedes (11) gelagert sind.

2. Vorrichtung nach Anspruch 1,
**dadurch gekennzeichnet,**
**dass** die Wellenabschnitte (4, 5) jeweils an beiden Enden auf Lagerböcken gelagert sind, wobei die Lagerböcke zweite winkelbewegliche Gelenklager (6) aufweisen.

3. Vorrichtung nach einem der vorangehenden Ansprüche, **gekennzeichnet dadurch**
die Verwendung zur Übertragung von Stellbewegungen bei Bogenweichen mit mehreren Stelleinrichtungen.
